# EUROPEAN PATENT SPECIFICATION

(11) **EP 2 272 619 B1**
(45) Date of publication and mention of the grant of the patent: **26.06.2013**
(21) Application number: 08873900.8
(22) Date of filing: 28.08.2008
(51) Int. Cl.: B23K 35/30, B23K 35/02, C22C 38/00, C22C 38/34, C22C 38/42, C22C 38/44, F28F 21/08, C22C 33/02

(54) **IRON-BASE HEAT- AND CORROSION-RESISTANT BRAZING FILLER METALS**
WÄRME- UND KORROSIONSFESTE HARTLOTZUSATZMETALLE AUF EISENBASIS
MÉTAUX D APPORT DE BRASAGE À BASE DE FER RÉSISTANT À LA CHALEUR ET À LA CORROSION

(30) Priority: 18.04.2008 JP 2008108683
(43) Date of publication of application: 12.01.2011
(73) Proprietor: Fukuda Metal Foil & Powder Co., Ltd., Kyoto 600-8435 (JP)
(72) Inventor: OTOBE, Katsunori, Kyoto-shi Kyoto 607-8305 (JP); NAGAI, Shozo, Kyoto-shi Kyoto 607-8305 (JP)
(74) Representative: Heinemann, Monica
(86) International application number: PCT/JP2008/065373
(87) International publication number: WO 2009/128174

(56) References cited:
- EP-A1- 0 854 002
- EP-A2- 1 875 984
- WO-A1-02/38327
- WO-A1-02/090038
- WO-A1-02/098600
- WO-A1-2006/126953
- WO-A1-2008/060225
- JP-A- 1 107 996
- JP-A- 63 011 651
- JP-A- 63 026 205
- JP-A- 2000 218 389
- JP-A- 2000 218 390
- JP-A- 2004 001 065
- JP-A- 2008 012 592
- JP-T- 2004 512 964
- JP-T- 2004 529 776
- US-A1- 2003 044 637

## Description

### TECHNICAL FIELD

The present invention relates to an iron-base brazing material alloy composition, more specifically to an iron-base heat- and corrosion-resistant brazing material which has excellent heat resistance and corrosion resistance, good wettability against stainless steel base materials and high strength and requires low costs, which is used for brazing of various stainless steel (specifically ferritic) base material parts and the like in the preparation of various heat exchangers such as EGR (exhaust gas recirculation) coolers.

### BACKGROUND ART

The Ni-Cr-P-Si-based brazing materials of the following Patent Documents 1 and 2, which have already been suggested by the present inventors, are widely used for brazing of stainless steel parts in the production of various heat exchangers such as EGR coolers.
Patent Document 1: Japanese Patent No. 3168158
Patent Document 2: Japanese Patent No. 3354922

However, in recent years, under the circumstance wherein the kind of the stainless steel used for base materials for parts is being changed from austenitic to ferritic, a disadvantage that the structure (crystal grains) of the base material after brazing is coarsened when used for a ferritic stainless steel base material, whereby the strength of the brazed part is decreased, has been observed in some of the Ni-Cr-P-Si-based brazing materials of the above-mentioned patents. It was found that this structure coarsening is caused by the amount of Cr contained in the Ni brazing material and the amount of Cr must be suppressed to lower than 20 wt%.

Furthermore, due to recent escalation of Ni metal and Cr metal costs, the costs of Ni brazing materials have risen, and a low cost brazing material with decreased amount of Ni is especially desired. As an iron-base brazing material for heat exchangers based on Fe which is low in cost, the following Patent Documents 3 to 6 are disclosed. However, some compositions among the compositions as shown in the examples of Patent Document 3 are not practical due to a high melting temperature, low strength and the like. It is expected that, when brazing is carried out on a ferritic stainless steel base material, the structure (crystal grains) of the base material may be coarsened and the brazing part strength may decrease since the base material contains Cr by 20 wt% or more, although this cannot be demonstrated by Patent Document 4 since the document includes no example.
Patent Document 3: Japanese Laid-Open Patent Publication No. 2004-512964
Patent Document 4: Japanese Laid-Open Patent Publication No. 2008-12592
Patent Document 5: WO 2008/060225 A1
Patent Document 6: WO 02/38327 A1

### DISCLOSURE OF THE INVENTION

### PROBLEMS TO BE SOLVED BY THE INVENTION

The present invention focuses on the above-mentioned problems and aims at providing an iron-base heat- and corrosion-resistant brazing material which can be brazed at a practical temperature (1120°C or lower) in brazing of various stainless steel parts, especially ferritic stainless steel base material parts, has good wettability against a base material, does not cause the coarsening of the base material structure, has excellent corrosion resistance against sulfuric acid and nitric acid, can provide high strength, and requires low costs.

### MEANS FOR SOLVING THE PROBLEMS

In order to solve the above-mentioned problems, the present inventors thought that the problems can be solved by newly reviewing effective ranges of the components of the Ni brazing material having a Ni-Cr-P-Si composition disclosed in the above-mentioned Patent Document 2 and improving the brazing material by finding effective main components and additional components which further improve the properties, thereby constructing a brazing material composition having better properties, and continued investigations.

As a result, it was found that the coarsening of the base material structure (crystal grains) in brazing on a ferritic stainless steel base material can be eliminated by suppressing the amount of Cr to 20 wt% or less in an iron-base brazing material alloy, the cost can be decreased by using Fe as a main component and decreasing the amount of expensive Ni to an effective amount, and the strength of the brazing material alloy can be increased. That is, the inventors have not prepossessed with the category of conventional Ni brazing materials and have constructed a novel brazing material alloy by using Fe-Cr-Ni as a main component, have further found the ranges of the amount of Si, the amount of P and the total amount of Si and P for decreasing the melting temperature of the alloy to the temperature which allows use as a brazing material, and have found that the corrosion resistance is further improved by adding Mo and Cu.

That is, the present invention is an iron-base heat- and corrosion-resistant brazing material containing 30 to 75 wt% of Fe, 35 wt% or less of Ni and 5 to 20 wt% of Cr in a total amount of Ni and Cr of 15 to 50 wt%, and 7 wt% or less of Si and 4 to 10 wt% of P in a total amount of Si and P of 9 to 13 wt%, and 0.3 to 5 wt% of optionally 0.5 to 5 wt% of Mo, optinally one or more kinds selected from Mn, W, Co, Nb, V and Ta in a total amount of 0.01 to 5 wt% and/or at least one kind of Al, Ca, Ti, Zr and Hf in an amount of 0.001 to 1 wt% and/or at least one kind of C and B in an amount of 0.001 to 0.2 wt%,and having a liquidus temperature of 1100° or lower and having a liquidus temperature of 1100° or lower. Cu. Preferably, the iron-base heat- and corrosion-resistant brazing material contains, and 1 to 7 wt% of Mo and Cu in a total amount. In another embodiment, the iron-base heat- and corrosion-resistant brazing material contains.

### EFFECT OF THE INVENTION

Since the iron-base heat- and corrosion-resistant brazing material of the present invention has the following features, the brazing material exhibits an effect in the application to various heat exchangers and the like, such as EGR coolers.
(1) Since the liquidus temperature is 1100°C or lower, brazing can be carried out at a practical temperature (1120°C or lower).
(2) Since the solidus temperature is 1000°C or higher, the heat resistance is good.
(3) The strength of the brazing material alloy itself is high.
(4) The wetting-spreadability against various stainless steel species is good.
(5) The corrosion resistance in sulfuric acid and nitric acid is excellent.
(6) The base material structure (crystal grains) after brazing is not coarsened also in ferritic stainless steel, and high strength can be obtained.

### BEST MODE FOR CARRYING OUT THE INVENTION

The reason why the ranges of the amounts of the respective components are limited as above in the present invention is described below.

The iron-base heat- and corrosion-resistant brazing material of the present invention has been achieved by decreasing the melting temperature basically by an eutectic reaction between a solid solution of Fe-Cr-Ni and an intermetallic compound of these elements and Si and P, adjusting the balance between the constitutional elements, and constituting ranges of the components at which the melting temperature and various properties (heat resistance, corrosion resistance, strength and the like) are good.

Since Ni improves the heat resistance, corrosion resistance and strength of the alloy by being dissolved in Fe-Cr to form a Fe-Cr-Ni solid solution, it is preferable to incorporate Ni as much as possible, but when the amount of Ni exceeds 35 wt%, a P compound having low strength is formed to decrease the strength of the brazing material alloy, whereby the cost increases. Although the liquidus temperature of the present brazing material is raised when the amount of Ni is decreased, objective properties can be obtained even in the case where the amount of Ni is 0 wt%. For the above-mentioned reason, the amount of Ni is limited to 35 wt% or less, preferably 10 to 35 wt%.

Cr is a standard component in the brazing material of the present brazing material similarly to Ni and is an important component which forms a solid solution of Fe-Cr or Fe-Cr-Ni to improve the heat resistance, corrosion resistance and strength of the alloy, but it was found that Cr has a problematic effect on brazing to ferritic stainless steel base materials. That is, when the amount of Cr exceeds 20 wt%, the base material structure after brazing may be coarsened and the strength of the part may be decreased. When the amount of Cr is less than 5 wt%, the corrosion resistance deteriorates. For the above-mentioned reason, the amount of Cr is limited to 5 to 20 wt%. Furthermore, it is necessary that the total amount of Ni and Cr is adjusted to 15 to 50 wt% to keep the balance between the properties in the brazing material of the present invention.

Si and P decisively affect the melting temperature of the alloy by the eutectic reaction with the Fe-Cr-Ni solid solution, and are components which also affect the brazing property (wetting-spreadability on stainless steel base materials), corrosion resistance and strength. Furthermore, it was found as to the present brazing material that not only the individual ranges of Si and P but also the range of the total amount of Si and P provide an especially important effect, and the liquidus temperature rises and the strength decreases in both of the case where the values are below the respective lower limits and the case where the values are above the respective upper limits. The lower limits which were found based on this viewpoint are 0 wt% for Si, 4 wt% for P and 9 wt% for the total of Si and P, and the upper limits are 7 wt% for Si, 10 wt% for P, and 13 wt% for the total of Si and P. That is, when the respective values are below the lower limits, a strong tendency to hypo-eutectic is developed and the liquidus temperature rises, and thus brazing cannot be carried out at an objective temperature. Alternatively, when the respective values are above the upper limits, not only the liquidus temperature rises due to a strong tendency to hyper-eutectic but also the strength of the alloy significantly decreases. For the above-mentioned reason, the amount of Si is limited to 7 wt% or less, the amount of P is limited to 4 to 10 wt%, and the total amount of Si and P is limited to 9 to 13 wt%. Furthermore, it is preferable that the total amount of Si and P is adjusted to 10 to 12 wt% so as to ensure the brazing at an objective temperature.

The inventors have found the effects of Mo and Cu and the synergistic effect of Mo and Cu as components for further improving the corrosion resistance and strength in the iron-base heat- and corrosion-resistant brazing material.

Mo forms a compound together with mainly P and Si, and further improves the corrosion resistance and strength, but when the amount of Mo exceeds 5 wt%, the balance of the melting temperature in the alloy is disrupted and the liquidus temperature may rise to an objective temperature or higher. For the above-mentioned reason, the amount of Mo is limited to 0.5 to 5 wt%.

Cu is an effective component which is dissolved in a Fe-Cr-Ni solid solution to further improve the corrosion resistance, but when the amount of Cu exceeds 5 wt%, the strength of the alloy may decrease. For the above-mentioned reason, the amount of Cu is limited to 0.3 to 5 wt%. In order to further ensure the synergistic effect of Mo and Cu to the corrosion resistance, it is preferable to adjust the total amount of Mo and Cu of 1 to 7 wt%.

Fe is a base component in the brazing material of the present invention. The content rate of Fe in the iron-base heat- and corrosion-resistant brazing material of the present invention is 30 to 75 wt%.

The inventors have intensively investigated other components and consequently obtained the following findings. That is, even one or more kinds of Mn, W, Co, Nb, V and Ta as other components are added by 0.01 to 5 wt% in total, the properties as a brazing material are not affected. Furthermore, they have confirmed that it is preferable to suppress the amounts of Al, Ca, Ti, Zr and Hf as trace impurities to 0.001 to 1 wt%, respectively, and the amounts of C and B to 0.001 to 0.2 wt%, respectively.

The iron-base heat- and corrosion-resistant brazing material of the present invention may be formed into an alloy powder by heating and melting a metal in which the amounts of Fe as a base and Ni, Cr, Si, P, Mo, Cu and other components to be incorporated as additive components have been adjusted so that each has a predetermined amount in wt% in a crucible in a dissolution furnace to form a liquid alloy, and subjecting the alloy to an atomization process, or may be used in the form of a foil, a rod or the like.

Specifically, the alloy powder prepared by the atomization process is adjusted to have a suitable particle size for an objective process to be practiced, and is useful since various processes such as forming a paste or sheet mixed with a binder resin, as well as spraying by sprinkling, thermal spraying or the like on the surface of the base material to which the resin is applied can be selected.

### EXAMPLES

Hereinafter, typical examples of the present invention and comparative examples are described.

The alloy compositions of examples of the present invention and Comparative Example [1] (out of the scope the present invention) and the results of the tests on the respective properties are shown in Table 1, and the alloy compositions of Comparative Example [2] (an example of a cited patent) and the results of the tests on the respective properties are shown in Table 2. The methods for testing the respective properties are as follows.

### 1) Test for measuring melting temperatures (liquidus and solidus)

The alloys of examples and comparative examples were each dissolved in an electric furnace under an argon gas atmosphere, and the melting temperature was measured by a thermal analysis. That is, a thermal analysis curve was drawn by a recorder connected to a thermocouple charged in the center portion of a molten metal, and the liquidus and solidus temperatures were read from the cooling curve thereof.

### 2) Bending strength test

The alloys of the examples and comparative examples were each dissolved in an electric furnace under an argon gas atmosphere, and the molten metal thereof was aspirated by a quartz tube having an inner diameter of 5 mmφ, solidified, and cut into a length of 35 mm to prepare a test piece. Then, the test piece was set on a bending strength test jig (supported at three points, distance between supporting points: 25.4 mm), a load was applied using a universal tester, and the bending strength (N/mm²) was calculated from the load at which breakage occurred and used as an index of the strength of the brazing material alloy.

### 3) Brazing test

As to the alloys of the examples and comparative examples, about 0.1 g of a sample was collected by utilizing the test piece of the above-mentioned 2) and used as a brazing material sample. The brazing material sample was then put on a SUS430 stainless steel base material, and brazed by heating at 1120°C for 30 minutes in a vacuum of 10⁻³ Pa. After the brazing, the surface area on which the brazing material was molten and spread was measured (braze spreading coefficient: spread surface area after brazing/set surface area prior to brazing) and used as an index of the wet spreadability of the brazing material alloy against the SUS430 stainless steel base material. The wet spreadability of the brazing material alloy was evaluated based on the following criterion.

### "Good": braze spreading coefficient was 10 or more

Furthermore, for the above-mentioned test pieces after brazing, the cross-sectional structure of the base material was observed and the presence or absence of coarsening of the structure (crystal grains) was observed.

### 4) Corrosion test in 30% sulfuric acid

The alloys of examples and comparative examples were each dissolved as in the above-mentioned test, and each of the molten metal was molded in a shell mold to give a molded piece of 10 × 10 × 20 mm. The surface of the molded piece was ground and polished to give a test piece. A 30% aqueous sulfuric acid solution was then prepared in a 300 cc beaker, the test piece was put therein, and a corrosion test was carried out by a whole immersing process. The test temperature was 60°C and the test time was 6 hours. The amount decreased by corrosion (mg/m²·s) was calculated from the weights and surface areas before and after the test, and was used as an index of the corrosion resistance of the brazing material alloy in sulfuric acid.

Simultaneously, the amount decreased by corrosion of the SUS304 stainless steel was obtained, and the corrosion resistance of the brazing material alloy was evaluated according to the following criteria.
"ⓞ": the amount decreased by corrosion was less than one-thousandth of that of SUS304
"O": the amount decreased by corrosion was one-thousandth or more and less than one-hundredth of that of SUS304
"Δ": the amount decreased by corrosion was one-hundredth or more and less than one-tenth of that of SUS304
"×": the amount decreased by corrosion was one-tenth or more of that of SUS304

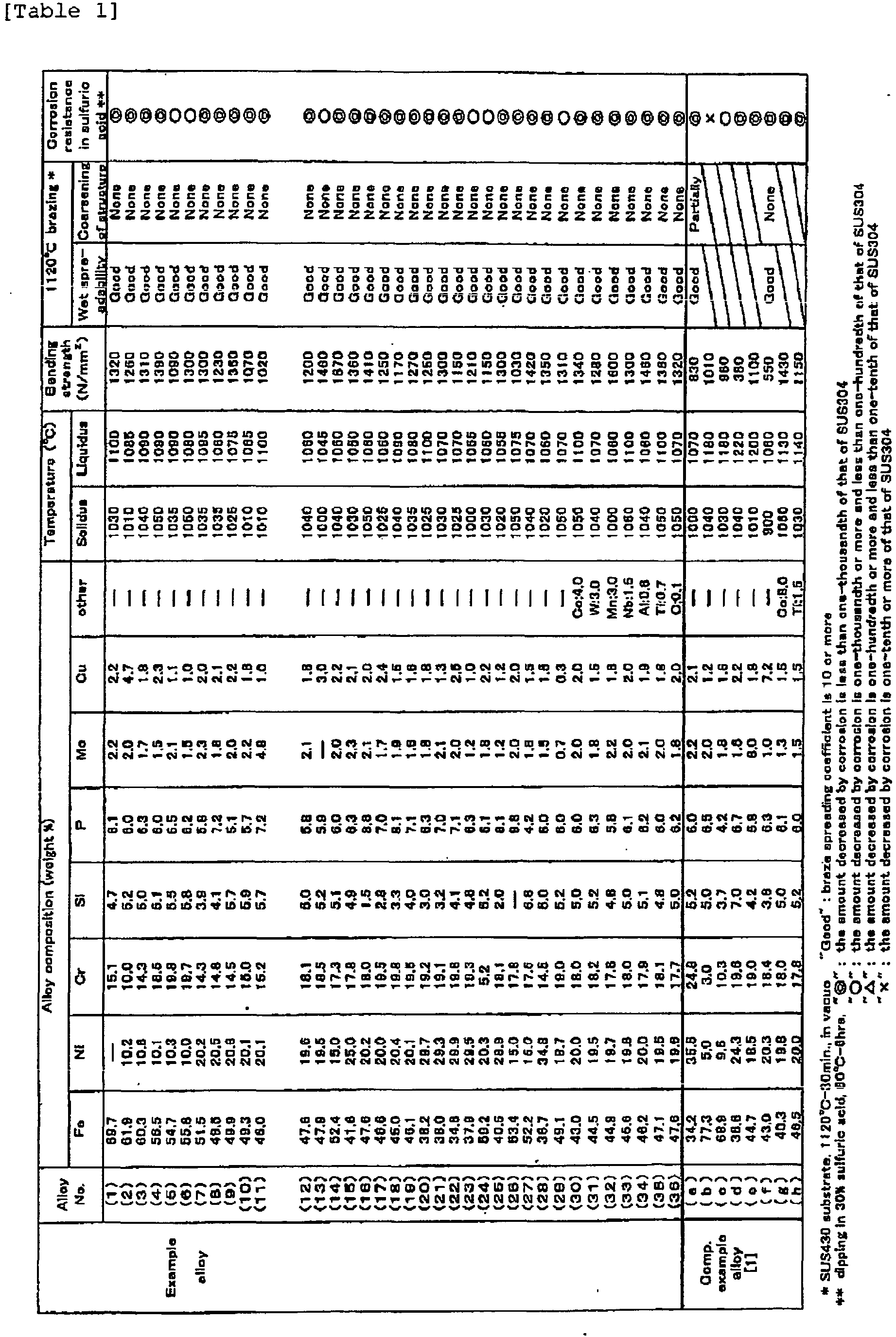

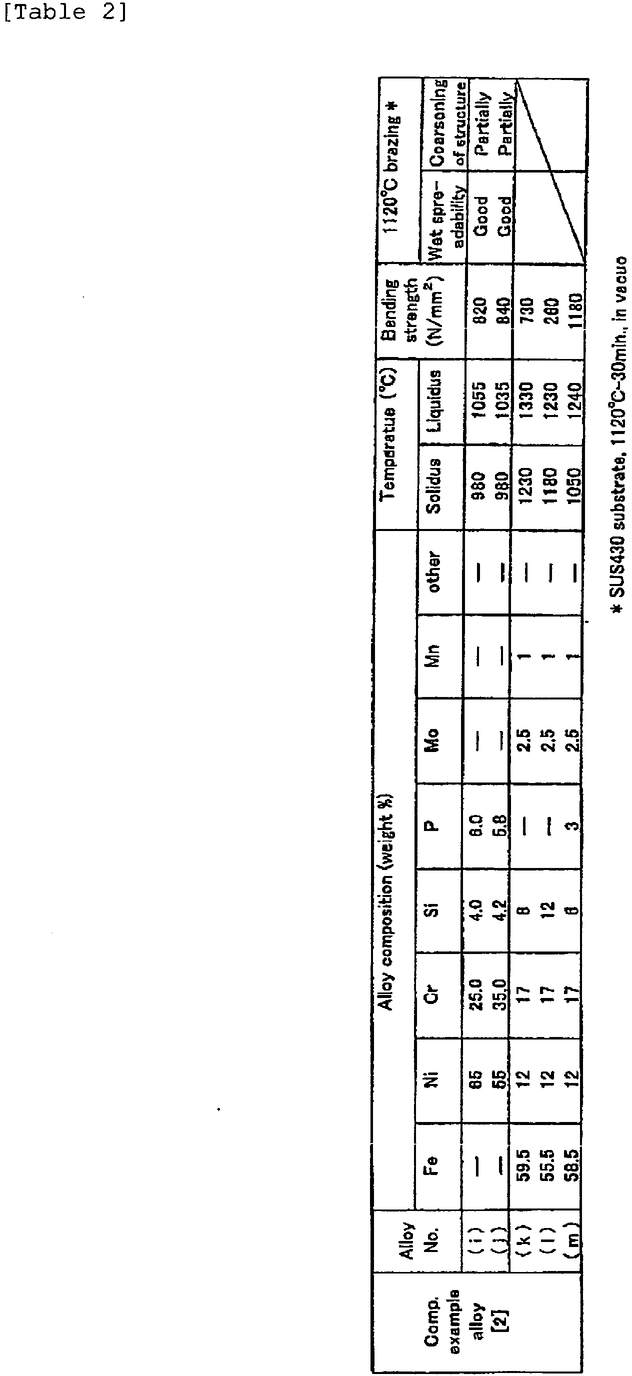

It was confirmed that the alloys of examples of the present invention shown in Table 1 (Nos. (1) to (36)) all had a liquidus temperature of 1100°C or lower, had a good wet spreadability against the SUS430 stainless steel base material in the vacuum brazing test at 1120°C, and caused no structure coarsening of the base material after brazing. Furthermore, it is shown that they all had a solidus temperatures of 1000C or higher and high heat resistance. As a result of the bending strength test, a bending strength of 1000 N/mm² or more was obtained and thus the strength was high in all of the alloys of the examples of the present invention. As a result of the corrosion test in 30% sulfuric acid, it is understood that the alloys of the examples of the present invention had excellent corrosion resistance in sulfuric acid since the amounts decreased by corrosion thereof were all less than one-tenth of that of the SUS304 stainless steel and most of the amounts were less than one-hundredth of that of the SUS304 stainless steel.

Alloys of Comparative Example [1] (Nos. (a) to (h)) shown in Table 1 have compositions which are out of the scope of the present invention, among which the alloy No. (a) is one in which the amounts of Ni, Cr, and total of Ni and Cr exceed the upper limits, which has a low bending strength, and structure coarsening of the SUS430 stainless steel base material was observed after brazing. The alloy No. (b) is one in which the amounts of Cr, and total of Ni and Cr are below the lower limits, which cannot be brazed at 1120°C since it has a high liquidus temperature of 1180°C and has poor corrosion resistance. The alloy No. (c) has a strong tendency of hypo-eutectic since the total amount of Si and P is below the lower limit, and has a high liquidus temperature of 1180°C, and thus cannot be brazed at 1120°C. The alloy No. (d) has a strong tendency of hyper-eutectic since the total amount of Si and P exceeds the upper limit, and this alloy cannot be brazed at 1120°C since it has a high liquidus temperature of 1220°C, and has a significantly lowered bending strength. The alloy No. (e) has a high liquidus temperature of 1200°C and thus cannot be brazed at 1120°C since the amounts of Mo, and total of Mo and Cu exceed the upper limits. The alloy No. (f) has a decreased bending strength, and has a solidus temperature decreased to 900°C and a tendency of deterioration of heat resistance since the amounts of Cu, and total of Mo and Cu exceed the upper limits. The alloys Nos. (g) and (h) have high liquidus temperatures and cannot be brazed at 1120°C since the amounts of Co and Ti, which are other components, exceed the upper limits.

In the alloys of comparative examples shown in Table 2, the alloys Nos. (i) and (j) are Ni-Cr-P-Si alloys described in Japanese Patent No. 3354922, for which a phenomenon that a part of a base material structure is coarsened was confirmed when brazed on a SUS430 stainless steel base material. The alloys of Comparative Examples Nos. (k), (1) and (m) are alloys of the iron-base brazing material compositions described in Japanese Laid-Open Patent Publication No. 2004-512964, all of which have a high liquidus temperature of 1200°C or higher and cannot be brazed at a practical temperature of 1120°C.

Meanwhile, it was confirmed that the alloys of examples of the present invention showed a good wet spreadability against base materials of various stainless steel species (austenitic; SUS304, SUS316 and the like, ferritic; SUS430, SUS444 and the like, martensitic; SUS410 and the like) and showed a good brazing property under brazing atmospheres such as vacuum as well as a reductive hydrogen atmosphere and an inactive argon atmosphere.

Furthermore, it was confirmed that the alloys of examples of the present invention also have good corrosion resistance against sulfuric acid and various aqueous solutions of acids such as nitric acid, aqueous ammonia and brine, and give a good result of a junction strength of a brazed part.

### INDUDTRIAL APPLICABILITY

As mentioned above, since the iron-base heat- and corrosion-resistant brazing material of the present invention is excellent in strength, heat resistance and corrosion resistance, and has a good braze spreadability in brazing of various stainless steel base materials, it can be widely utilized as a jointing material for the production of brazed parts for apparatuses such as EGR coolers as well as heat exchangers, hot water supplying parts and the like relating to environment and energy.

## Claims

1. An iron-base heat- and corrosion-resistant brazing material, consisting of 30 to 75 wt% of Fe, 35 wt% or less of Ni and 5 to 20 wt% of Cr in a total amount of Ni and Cr of 15 to 50 wt%, and 7 wt% or less of Si and 4 to 10 wt% of P in a total amount of Si and P of 9 to 13 wt%, and 0.3 to 5 wt% of optionally 0.5 to 5 wt% of Mo, optionally one or more kinds selected from Mn, W, Co, Nb, V and Ta in a total amount of 0.01 to 5 wt%, and/or at least one kind of Al, Ca, Ti, Zr and Hf in an amount of 0.001 to 1 wt%, and/or at least one kind of C and B in an amount of 0.001 to 0.2 wt%, Cu, and having a liquidus temperature of 1100° or lower.

2. The iron-base heat- and corrosion-resistant brazing material according to Claim 1, comprising.

3. The iron-base heat- and corrosion-resistant brazing material according to Claims 1-2, wherein the total amount of Mo and Cu is 1 to 7 wt%.

4. The iron-base heat- and corrosion-resistant brazing material according to any one of Claims 1 to 3, comprising.

## Patentansprüche

1. Ein eisenbasiertes hitze- und korrosionsbeständiges Lötmaterial, bestehend aus 30 bis 75 Gew.-% Fe, 35 Gew.-% oder weniger Ni und 5 bis 20 Gew,-% Cr, wobei die Gesamtmenge aus Ni und Cr 15 bis 50 Gew,-% beträgt, und 7 Gew.-% oder weniger Si und 4 bis 10 Gew.-% P, wobei die Gesamtmenge aus Si und P 9 bis 13 Gew.-% beträgt, und 0,3 bis 5 Gew.-% Cu, gegebenenfalls 0,5 bis 5 Gew.-% Mo, gegebenenfalls einer oder mehreren Spezies, ausgewählt aus Mn, W, Co, Nb, V und Ta, in einer Gesamtmenge von 0,01 bis 5 Gew.-%, und/oder wenigstens eine Spezies von Al, Ca, Ti, Zr und Hf in einer Menge von 0,001 bis 1 Gew.-%, und/oder wenigstens eine Spezies von C und B in einer Menge von 0,001 bis 0,2 Gew.-%, und wobei das Lötmaterial eine Liquidus-Temperatur von 1100°C oder weniger besitzt.

2. Das eisenbasierte hitze- und korrosionsbeständige Lötmaterial gemäß Anspruch 1, das 0,5 bis 5 Gew.-% Mo umfasst.

3. Das eisenbasierte hitze- und korrosionsbeständige Lötmaterial gemäß den Ansprüchen 1-2, wobei die Gesamtmenge aus Mo und Cu 1 bis 7 Gew.-% beträgt.

4. Das eisenbasierte hitze- und korrosionsbeständige Lötmaterial gemäß einem der Ansprüche 1 bis 3, das eine oder mehrere Spezies, ausgewählt aus Mn, W, Co, Nb, V und Ta, in einer Gesamtmenge von 0,01 bis 5 Gew.-% und/oder wenigstens eine Spezies von Al, Ca, Ti, Zr und Hf in einer Menge von 0,001 bis 1 Gew.-% und/oder wenigstens eine Spezies von C und B in einer Menge von 0,001 bis 0,2 Gew.-% umfasst.

## Revendications

1. Matériau de brasage à base de fer résistant à la chaleur et à la corrosion, consistant en 30 à 75 % en poids de Fe, 35 % en poids ou moins de Ni et 5 à 20 % en poids de Cr dans une quantité totale de Ni et de Cr de 15 à 50 % en poids, et 7 % en poids ou moins de Si et 4 à 10 % en poids de P dans une quantité totale de Si et de P de 9 à 13 % en poids, et 0,3 à 5 % en poids de Cu, optionnellement 0,5 à 5% en poids de Mo, optionnellement un ou plusieurs types sélectionnés parmi Mn, W, Co, Nb, V et Ta dans une quantité totale de 0,01 à 5 % en poids, et/ou au moins un type de Al, Ca, Ti, Zr, et Hf dans une quantité de 0,001 à 1 % en poids, et/ou au moins un type de C et B dans une quantité de 0,001 à 0,2 % en poids, et ayant une température de liquidus de 1100°C ou moins.

2. Matériau de brasage à base de fer résistant à la chaleur et à la corrosion selon la revendication 1, comprenant de 0,5 à 5% en poids de Mo.

3. Matériau de brasage à base de fer résistant à la chaleur et à la corrosion selon les revendications 1-2, dans lesquelles la quantité totale de Mo et de Cu est 1 à 7 % en poids.

4. Matériau de brasage à base de fer résistant à la chaleur et à la corrosion selon l'une quelconque des revendications 1 à 3, comprenant un ou plusieurs types sélectionnés parmi Mn, W, Co, Nb, V et Ta dans une quantité totale de 0,01 à 5 % en poids, et/ou au moins un type de Al, Ca, Ti, Zr, et Hf dans une quantité de 0,001 à 1 % en poids, et/ou au moins un type de C et B dans une quantité de 0,001 à 0,2 % en poids.
